## Europäisches Patentamt

## European Patent Office

## Office européen des brevets

(19)

(11) Veröffentlichungsnummer: **0 206 430**
**A2**

(12) **EUROPÄISCHE PATENTANMELDUNG**

(21) Anmeldenummer: **86201092.3**

(22) Anmeldetag: **23.06.86**

(51) Int. Cl.⁴: **A 23 G  9/12,** F 25 D  3/08

(30) Priorität: **26.06.85  AT 1902/85**

(43) Veröffentlichungstag der Anmeldung: **30.12.86**
**Patentblatt 86/52**

(84) Benannte Vertragsstaaten: **AT DE FR GB IT NL SE**

(71) Anmelder: **N.V. Philips' Gloeilampenfabrieken,**
**Groenewoudseweg 1, NL-5621 BA Eindhoven (NL)**

(72) Erfinder: **Bukoschek, Romuald Leander, INT.**
**OCTROOIBUREAU B.V. Prof. Holstlaan 6, NL-5656 AA**
**Eindhoven (NL)**
Erfinder: **Huszar, Reinhard, INT. OCTROOIBUREAU B.V.**
**Prof. Holstlaan 6, NL-5656 AA Eindhoven (NL)**

(74) Vertreter: **Bos, Kornelis Sjoerd et al, INTERNATIONAAL**
**OCTROOIBUREAU B.V. Prof. Holstlaan 6, NL-5656 AA**
**Eindhoven (NL)**

(54) **Speiseeismaschine.**

(57)  Bei einer Speiseeismaschine mit einem zylindrischen Behälter (1), in dessen Innerem mindestens eine zur Speiseeisbildung dienende gekühlte Fläche vorgesehen ist, und mit einem Elektromotor (4), der über ein Getriebe (5) eine zentral zum Behälter verlaufende Welle (6) antreibt, die ein mindestens mit der gekühlten Fläche zusammenwirkendes Schab- und Rührwerkzeug (8) trägt, ist als Elektromotor ein selbstanlaufender Einphasensynchronmotor vorgesehen und weist das Schab- und Rührwerkzeug für beide Drehrichtungen der Welle mindestens je einen vorwiegend in der betreffenden Drehrichtung wirksamen Schab- und Rührwerkzeugabschnitt (10, 11) auf.

**0 206 430**

## Speiseeismaschine

Die Erfindung betrifft eine Speiseeismaschine mit einem zylindrischen Behälter, in dessen Innerem mindestens eine zur Speiseeisbildung dienende gekühlte Fläche vorgesehen ist, und mit einem Elektromotor, der über ein Getriebe eine zentral zum Behälter verlaufende Welle antreibt, die ein mindestens mit der gekühlten Fläche zusammenwirkendes Schab- und Rührwerkzeug trägt. Derartige Speiseeismaschinen, die als Haushaltsgeräte Verwendung finden, sind in den verschiedensten Ausführungsformen, insbesondere hinsichtlich der Ausbildung der zur Speiseeisbildung dienenden gekühlten Fläche, bekannt. So zeigt die DE-OS 28 31 592 eine Speiseeismaschine, bei der in einen Behälter eine im wesentlichen scheibenförmige Kältepatrone einlegbar ist, wobei die vom Boden des Behälters abgewandte Fläche der Kältepatrone die zur Speiseeisbildung dienende gekühlte Fläche bildet. Bei einer anderen, in der US-PS 3 921 961 gezeigten Ausführungsform ist ein Behälter selbst als Kältepatrone ausgebildet, wobei seine innere Mantelfläche die zur Speiseeisbildung dienende gekühlte Fläche bildet. Bei einer weiteren, beispielsweise in der EP-OS 0 106 814 gezeigten Ausführungsform ist eine eigene Kühlvorrichtung für einen Behälter vorgesehen, wobei sowohl seine innere Bodenfläche als auch seine innere Mantelfläche eine zur Speiseeisbildung dienende gekühlte Fläche bilden.

Die Erfindung hat sich zum Ziel gesetzt, eine Speiseeismaschine der eingangs angeführten Gattung hinsichtlich ihres Aufbaues und ihrer Wirkungsweise zu verbessern. Erfindungsgemäß wird dies dadurch erreicht, daß als Elektromotor ein selbstanlaufender Einphasensynchronmotor vorgesehen ist und daß das Schab- und Rührwerkzeug für beide Drehrichtungen der Welle mindestens je einen vorwiegend in der betreffenden Drehrichtung wirksamen Schab- und Rührwerkzeugabschnitt aufweist. Dadurch, daß als Elektromotor ein selbstanlaufender Einphasensynchronmotor vorgesehen ist, werden bei einer derartigen Speiseeismaschine mehrere Vorteile erhalten. Einphasensynchronmotore sind bei relativ geringen Abmessungen in der Lage, eine relativ hohe Leistung abzugeben, was im Hinblick auf eine kompakte Bauweise, wie sie insbesondere für Haushaltsgeräte gewünscht wird, vorteilhaft ist. Bekanntlich ist die Drehrichtung, in der ein Einphasensynchronmotor anläuft, nicht festgelegt, so daß er nach den jeweils vorliegenden Anlaufbedingungen in einer der beiden Drehrichtungen anlaufen kann, und bei Überlastung wechselt er seine Drehrichtung. Für viele Anwendungen ist dies unerwünscht, weshalb dann durch den Einbau einer Drehrichtungssperre eine bestimmte Drehrichtung festgelegt wird. Gerade im vorliegenden Zusammenhang werden aber die vorgenannten Eigenschaften eines Einphasensynchronmotors vorteilhaft ausgenützt, dies im Zusammenhang mit der Ausbildung des Schab- und Rührwerkzeuges dahingehend, daß es für beide Drehrichtungen mindestens je einen vorwiegend in der betreffenden Drehrichtung wirksamen Schab- und Rührwerkzeugabschnitt aufweist. Auf diese Weise ist sichergestellt, daß unabhängig davon mit welcher Drehrichtung der Eiphasensynchronmotor anläuft, die Speiseeisgewinnung in einwandfreier Weise erfolgt. Weiters wird durch die Eigenschaft der Drehrichtungsumkehr bei Überlastung des Einphasensynchronmotors erreicht, daß lokal begrenzte stärkere Speiseeisbildungen an der gekühlten Fläche, die bei nicht gleichmäßiger Konsistenz der Speiseeismasse auftreten können, sicher abgeschabt werden, da der Einphasensynchronmotor seine Drehrichtung umkehrt, wenn der eine Schab- und Rührwerkzeugabschnitt das Abschaben nicht bewerkstelligt, wonach dann der andere Schab- und Rührwerkzeugabschnitt in der anderen Drehrichtung zum Abschaben ansetzt. Unter Umständen kann sich dieser Vorgang auch einige Male wiederholen, bis die lokale verstärkte Speiseeisbildung vollständig abgeschabt ist. Außerdem ist ein Einphasensynchronmotor durch die automatische Drehrichtungsumkehr überlastungssicherer als andere Elektromotoren, so daß sich vielfach zusätzliche Überlastschutzeinrichtungen, wie Temperatur- oder Zeitschalter, erübrigen.

Als vorteilhaft hat sich erwiesen, wenn zwei Schab- und Rührwerkzeugabschnitte, die vorwiegend in je einer der beiden Drehrichtungen wirksam sind, spiegelbildlich zur Welle ausgebildet sind. Auf diese Weise wird bei einem einfachen Aufbau des Werkzeuges in beiden Drehrichtungen ein einwandfreies Verteilen der Speiseeismischung und Abschaben des sich an der gekühlten Fläche bildenden Speiseeises erhalten. Selbstverständlich können auch mehrere zu einem solchen Paar zusammengefaßte Schab- und Rührwerkzeugabschnitte vorgesehen werden.

Weiters hat sich als vorteilhaft erwiesen, wenn die Schab- und Rührwerkzeugabschnitte an ihren mit der gekühlten Fläche zusammenwirkenden Abschnitten in der zum Schaben entgegengesetzten Drehrichtung mit einer der gekühlten Fläche zugewandten Einbuchtung versehen sind. Auf diese Weise wird erreicht, daß derjenige Schab- und Rührwerkzeugabschnitt, welcher in der betreffenden Drehrichtung nicht am Schaben beteiligt ist und sich in der entgegengesetzten Drehrichtung dreht, durch die hiebei vorne liegende Einbuchtung die Speiseeismischung vor sich herschiebt und über die gekühlte Fläche gleichmäßig verteilt, wodurch die Abkühlung der Speiseeismischung begünstigt und eine gleichmäßigere Speiseeisbildung erhalten wird.

Als sehr vorteilhaft hat sich erwiesen, wenn das vom Einphasensynchronmotor maximal abgebbare Moment entsprechend der gewünschten tiefsten Temperatur des Speiseeises gewählt ist, wobei beim Erreichen dieser Temperatur der Einphasensynchronmotor aufeinanderfolgend seine Drehrichtung wechselt und damit das Schab- und Rührwerkzeug eine Pendelbewegung ausführt. Auf diese Weise ist erreicht, daß in der Endphase der Speiseeisbildung, bei zunehmender Steifigkeit bei niedriger werdender Temperatur der Speiseeismischung, eine häufige Drehrichtungsumkehr des Einphasensynchronmotors erfolgt, wodurch das sich an der Kältepatrone bildende Speiseeis besser abgeschabt und durch das Rühren mit abwechselnder Drehrichtung gleichmäßiger verteilt wird, so daß es zu keiner Knollenbildung kommen kann. Wenn das Speiseeis die gewünschte tiefste Temperatur erreicht hat, tritt dann ein ausgeprägtes Pendeln des Schab- und Rührwerkzeuges ein, wodurch einerseits der Einphasensynchronmotor nicht überlastet wird und andererseits die Fertigstellung des Speiseeises zu erkennen ist.

In diesem Zusammenhang hat sich weiters als vorteilhaft erwiesen, wenn das vom Einphasensynchronmotor maximal abgebbare Moment durch einen in den Motorstromkreis aufgenommenen, einstellbar ausgebildeten Vorwiderstand regelbar ist. Hiedurch kann auf einfache Weise die tiefste Temperatur, welche das Speiseeis annehmen soll, gewählt werden.

Als vorteilhaft hat sich auch erwiesen, wenn für jede der beiden Drehrichtungen eine Anzeigevorrichtung vorgesehen ist. Auf diese Weise können die aufeinanderfolgenden Umkehrungen der Drehrichtung einfach beobachtet und damit der Grad der Fertigstellung des Speiseeises festgestellt werden. Die Anzeigevorrichtungen können dabei als optische oder akustische Vorrichtungen ausgebildet sein, die über Schalter ein- und ausgeschaltet werden.

In diesem Zusammenhang hat sich im Hinblick auf einen einfachen konstruktiven Aufbau als vorteilhaft erwiesen, wenn die Anzeigevorrichtungen von einem Schaltarm betätigt werden, der über eine Rutschkupplung mit einem Rad des Getriebes in Verbindung steht.

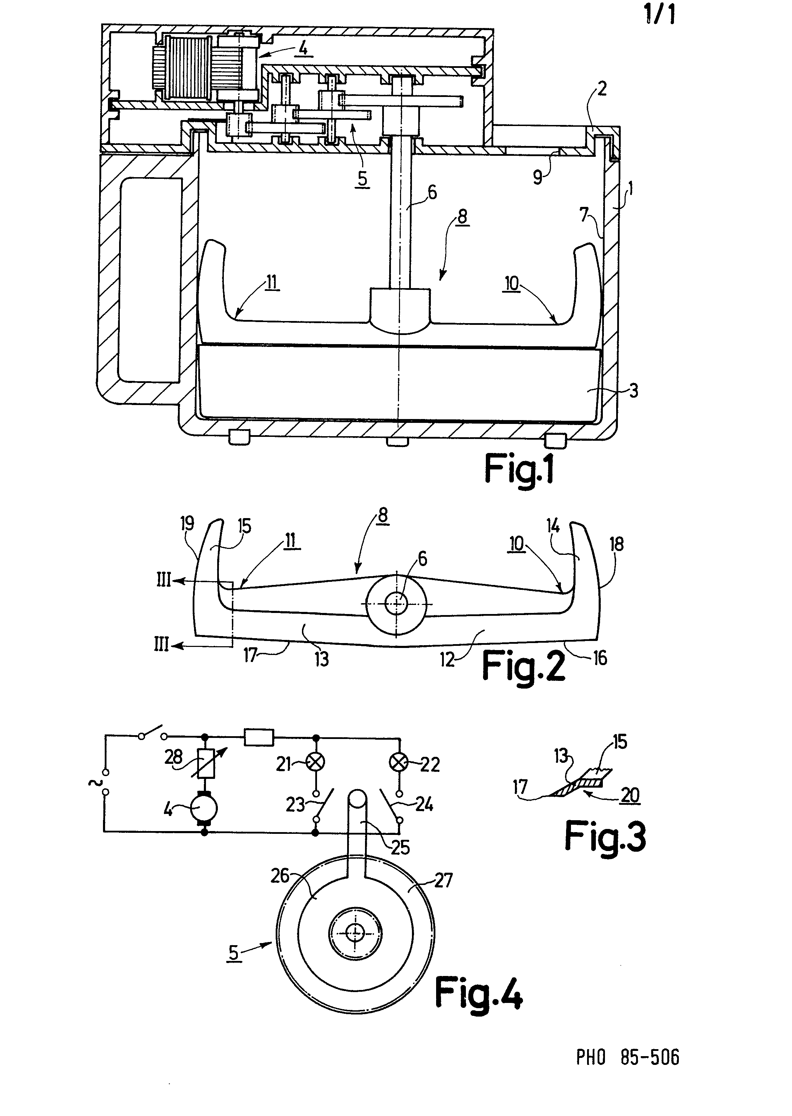

Die Erfindung wird im folgenden anhand der Zeichnung, in der ein Ausführungsbeispiel der Erfindung dargestellt ist, auf das sie aber nicht beschränkt sein soll, näher erläutert. Fig.1 zeigt eine erfindungsgemäße Speiseeismaschine, teilweise im Schnitt in Seitenansicht. Fig.2 zeigt das Schab- und Rührwerkzeug der Speiseeismaschine nach Fig.1 in Draufsicht. Fig.3 zeigt das Schab- und Rührwerkzeug nach Fig.2 im Schnitt nach der Linie III-III in Fig.2. Fig.4 zeigt schematisch die Anzeigevorrichtungen für die jeweils vorliegende Drehrichtung des Einphasensynchronmotors und dessen Stromkreis, in den ein einstellbarer Vorwiderstand aufgenommen ist.

In Fig.1 ist mit 1 ein thermisch isolierter zylindrischer Behälter bezeichnet, der durch einen zweckmäßigerweise an ihm verriegelbaren Deckel 2 abschließbar ist. In den Behälter 1 ist eine scheibenförmige Kältepatrone 3 eingelegt, die ein Latentwärmespeichermittel enthält. Die vom Boden des Behälters 1 abgewandte Fläche der Kältepatrone 3 bildet dabei eine zur Speiseeisbildung dienende gekühlte Fläche. Im Deckel 2 ist ein Elektromotor 4 untergebracht, der über ein Getriebe 5, das hier als dreistufiges Zahnradgetriebe ausgebildet ist, eine zentral zum Behälter 1 verlaufende Welle 6 antreibt, die ein mit der zur Speiseeisbildung dienenden gekühlten Fläche der Kältepatrone 3 und der Behälterwand 7 zusammenwirkendes Schab- und Rührwerkzeug 8 trägt. Falls erwünscht, kann der Elektromotor 4 zusammen mit dem Getriebe 5 als eine vom Deckel 2 abnehmbare Baueinheit ausgebildet sein. Ebenso kann die Welle 6 zusammen mit dem Schab- und Rührwerkzeug mittels einer Steckverbindung vom Getriebe lösbar sein. Zwischen dem Getriebe 5 und der Welle 6 kann auch eine Federanordnung vorgesehen sein, welche das Schab- und Rührwerkzeug unter Federdruck an der zur Speiseeisbildung dienenden gekühlten Fläche der Kältepatrone 3 angelegt hält, um das Abschaben des sich an der Kältepatrone bildenden Speiseeises besonders sicher zu gestalten.

Vor der Inbetriebnahme der Speiseeismaschine wird die Kältepatrone 3 beispielsweise in einem Tiefkühlfach eines Kühlschrankes abgekühlt und danach in den Behälter 1 eingelegt. Hierauf wird der Deckel 2 mit dem Schab- und Rührwerkzeug 8 auf den Behälter 1 aufgesetzt, wonach durch die im Deckel 2 vorgesehene Einfüllöffnung 9 eine Speiseeismischung eingefüllt wird. Nach dem Einschalten des Elektromotors 4 beginnt sich das Schab- und Rührwerkzeug 8 zu drehen, wobei die Speiseeismischung vermischt und das sich jeweils an der Kältepatrone bildende Speiseeis abgeschabt und wieder mit der Speiseeismischung vermischt wird, dies solange, bis nur noch Speiseeis mit der gewünschten Temperatur und Konsistenz vorhanden ist.

Bei einer derartigen Speiseeismaschine ist nun als Elektromotor 4 ein selbstanlaufender Einphasensynchronmotor vorgesehen, der bei relativ kleinen Abmessungen in der Lage ist, eine relativ hohe Leistung abzugeben. Bekanntlich ist die Drehrichtung, in der ein Einphasensynchronmotor anläuft, nicht festgelegt, so daß die Welle 6 in einer der beiden Drehrichtungen angetrieben werden kann. Demgemäß weist das Schab- und Rührwerkzeug 8 für beide Drehrichtungen der Welle 6 mindestens je einen vorwiegend in der betreffenden Drehrichtung wirksamen Schab- und Rührwerkzeugabschnitt 10 bzw. 11 auf. Beim vorliegenden Ausführungsbeispiel ist für jede der beiden Drehrichtungen der Welle 6 je ein solcher Schab- und Rührwerkzeugabschnitt 10 und 11 vorgesehen, die spiegelbildlich zur Welle 6 ausgebildet sind, wie dies Fig.2 zeigt. Jeder dieser Schab- und Rührwerkzeugabschnitte 10 bzw. 11 weist einen von der Welle 6 auskragenden, mit der Kältepatrone 3 zusammenwirkenden Abschnitt 12 bzw. 13 und einen von diesem abgewinkelten Abschnitt 14 bzw. 15 auf, der mit der Behälterwand 7 zusammenwirkt und außerdem schaufelförmig ausgebildet ist, so daß er auch ein Vermischen und Verrühren der Speiseeismischung bewirkt. Wie aus Fig.2 ersichtlich ist, liegt bei der Drehung des Schab- und Rührwerkzeuges im Uhrzeigersinn die Kante 16 des Abschnittes 12 vorne, wogegen bei einer Drehung entgegen dem Uhrzeigersinn die Kante 17 des Abschnittes 13 vorne liegt, so daß im erstgenannten Fall die Kante 16 und im zweitgenannten Fall die Kante 17 das Abschaben des sich an der Kältepatrone bildenden Speiseeises bewirkt. Gleiches gilt für die Kanten 18 bzw. 19 an den Abschnitten 14 bzw. 15, die mit der Behälterwand 7 zusammenwirken. Wie aus Fig.3 für den Abschnitt 13 ersichtlich ist, sind die Kanten 16 und 17 durch keilförmige Schrägflächen an den Abschnitten 12 und 13 gebildet, so daß mit ihnen eine gute Schabwirkung erreicht wird, wobei sich als vorteilhaft erwiesen hat, wenn die Kanten 16 und 17 einen geringfügig stumpfen Winkel miteinander einschließen, wie dies Fig.2 zeigt. Selbstverständlich könnten für jede Drehrichtung der Welle 6 auch mehr als je ein vorwiegend in der betreffenden Drehrichtung wirksamer Schab- und Rührwerkzeugabschnitt 10 bzw. 11 vorgesehen sein, die dann entsprechend winkelversetzt an der Welle 6 anzuordnen wären.

Wie weiters aus Fig.3 für den Abschnitt 13 ersichtlich ist, sind die mit der gekühlten Fläche der Kältepatrone 3 zusammenwirkenden Abschnitte 12 und 13 der Schab- und Rührwerkzeugabschnitte 10 und 11 in der zum Schaben entgegengesetzten Drehrichtung mit einer der gekühlten Fläche der Kältepatrone 3 zugewandten Einbuchtung versehen. In Fig.3 ist die am Abschnitt 13 vorgesehene Einbuchtung mit 20 bezeichnet. Auf diese Weise ist erreicht, daß, wenn sich der betreffende Schab- und Rührwerkzeugabschnitt 10 bzw. 11 in der zum Schaben entgegengesetzten Drehrichtung dreht, die betreffende Einbuchtung die Speiseeismischung vor sich herschiebt und dabei zur Anlage an die gekühlte Fläche der Kältepatrone 3 bringt, was den Temperaturaustausch zwischen der Kältepatrone und der Speiseeismischung begünstigt und damit die Speiseeisbildung beschleunigt. Wie aus Fig.3 ersichtlich ist, ist beim vorliegenden Ausführungsbeispiel der Querschnitt der Einbuchtung 20 rautenförmig gewählt. Hinsichtlich dieser querschnittsmäßigen Formgebung der Einbuchtungen bestehen natürlich auch noch andere Möglichkeiten, wie beispielsweise kreisförmig oder nur keilförmig.

Bekanntlich weist ein selbstanlaufender Einphasensynchronmotor die Eigenschaft auf, daß er bei Überlastung automatisch seine Drehrichtung umkehrt. Im vorliegenden Zusammenhang bringt diese Eigenschaft einen besonderen Vorteil. Im Zuge der Bildung des Speiseeises an der gekühlten Fläche der Kältepatrone kann es dazu kommen, daß lokal begrenzt eine verstärkte Speiseeisbildung entsteht, wenn die Konsistenz der Speiseeismischung nicht gleichförmig ist. Eine solche verstärkte Speiseeisbildung kann zur Folge haben, daß sie vom in der betreffenden Drehrichtung wirksamen Schab- und Rührwerkzeugabschnitt nicht mehr von der Kältepatrone abgeschabt werden kann, was dann zu einem Blockieren des Schab- und Rührwerkzeuges und damit auch des Einphasensynchronmotors führt. In einem solchen Fall dreht der Einphasensynchronmotor seine Drehrichtung um, so daß dann der andere, dieser Drehrichtung zugeordnete Schab- und Rührwerkzeugabschnitt von der dieser Drehrichtung entsprechenden Seite her auf die verstärkte Speiseeisbildung auftrifft und diese abzuschaben versucht. Gelingt dies auch nicht, so dreht der Einphasensynchronmotor abermals seine Drehrichtung um, so daß dann wieder der der erstgenannten Drehrichtung zugeordnete Schab- und Rührwerkzeugabschnitt von der dieser Drehrichtung entsprechenden Seite her auf die verstärkte Speiseeisbildung auftrifft und wieder versucht, diese abzuschaben. Dieser Vorgang wiederholt sich so lange, bis eine solche verstärkte Speiseeisbildung vollständig von der Kältepatrone abgeschabt ist. Auf diese Weise ist sichergestellt, daß die Speiseeisbildung ohne Störung einwandfrei vor sich geht. Durch den ständigen Wechsel der Drehrichtung des Einphasensynchronmotors ist dabei auch gewährleistet, daß dieser nicht überlastet wird, so daß sich ein zusätzlicher Überlastungsschutz erübrigt. Falls erwünscht, kann aber im Weg der Kraftübertragung vom Einphasensynchronmotor zur das Schab- und Rührwerkzeug tragenden Welle, beispielsweise zwischen dieser und dem Abtrieb des vom Einphasensynchronmotor angetriebenen Getriebes, auch noch zusätzlich eine Kupplung mit begrenztem Totgang vorgesehen werden, wie dies bei Antrieben mit einem Einphasensynchronmotor vielfach üblich ist, wodurch einerseits sein Startverhalten verbessert und andererseits durch die Möglichkeit einer Drehrichtungsumkehr für einen weiteren Überlastungsschutz gesorgt wird.

Weiters hat sich als vorteilhaft erwiesen, wenn das vom Einphasensynchronmotor maximal abgebbare Moment, das in bekannter Weise von den für die Dimensionierung des Motors maßgeblichen Parametern festgelegt wird, entsprechend der gewünschten tiefsten Temperatur des Speiseeises gewählt ist, wobei dann beim Erreichen dieser Temperatur der Einphasensynchronmotor aufeinanderfolgend seine Drehrichtung wechselt und damit das Schab- und Rührwerkzeug eine Pendelbewegung ausführt. Auf diese Weise ist erreicht, daß in der Endphase der Speiseeisbildung, bei zunehmender Steifigkeit bei niedriger werdender Temperatur der Speiseeismischung, eine häufige Drehrichtungsumkehr des Einphasensynchronmotors erfolgt, wodurch das sich an der Kältepatrone bildende Speiseeis besser abgeschabt und durch das Rühren mit abwechselnder Drehrichtung gleichmäßiger verteilt wird. Wenn das Speiseeis die gewünschte tiefste Temperatur erreicht hat, tritt dann ein ausgeprägtes Pendeln des Schab- und Rührwerkzeuges ein, wodurch einerseits der Einphasensynchronmotor nicht überlastet wird und andererseits die Fertigstellung des Speiseeises zu erkennen ist.

Um ein solches Erkennen der Fertigstellung des Speiseeises zu erleichtern, ist für jede der beiden Drehrichtungen eine Anzeigevorrichtung vorgesehen. Im vorliegenden Fall sind dies, wie Fig.4 zeigt, zwei Glühlampen 21 und 22, die von zwei Schaltern 23 und 24 abwechselnd ein- und ausgeschaltet werden. Zur Betätigung dieser beiden Schalter 23 und 24 ist ein Schaltarm 25 vorgesehen, der von einer Scheibe 26 auskragt, die koaxial zu einem Rad 27 des Getriebes 5 angeordnet ist und über eine hier nicht sichtbare Rutschkupplung mit diesem Rad 27 in Verbindung steht. Auf diese Weise wird der Schaltarm 25 in jeder der beiden Drehrichtungen solange mitgenommen, bis er den betreffenden Schalter 23 bzw. 24 betätigt hat und damit entweder die Glühlampe 21 oder 22 aufleuchtet. Bei einem Pendeln des Schab- und Rührwerkzeuges kommt es dann zu einem ständigen abwechselnden Aufleuchten der beiden Glühlampen 21 und 22, wodurch einfach zu erkennen ist, daß das Speiseeis fertiggestellt ist. Anstelle einer optischen Anzeige könnte natürlich auch eine akustische Anzeige mit zwei unterschiedlichen Tönen vorgesehen werden. Selbstverständlich bestehen im Rahmen des bekannten Standes der Technik auch noch andere Möglichkeiten für die Ausbildung derartiger Anzeigevorrichtungen.

Wie ebenfalls aus Fig.4 ersichtlich, hat sich weiters als sehr zweckmäßig erwiesen, wenn das vom Einphasensynchronmotor 4 maximal abgebbare Moment durch einen in den Motorstromkreis aufgenommenen, einstellbar ausgebildeten Vorwiderstand 28 regelbar ist. Auf diese Weise kann die tiefste Temperatur, welche das Speiseeis annehmen soll, einfach gewählt werden, da dann, je nach der temperaturabhängigen Steifigkeit des Speiseeises, die Pendelbewegung des Schab- und Rührwerkzeuges früher oder später einsetzt.

Wie ersichtlich, sind eine Reihe von Abwandlungen des im vorstehenden beschriebenen Ausführungsbeispieles möglich, ohne daß dabei der Rahmen der Erfindung verlassen wird. In diesem Zusammenhang ist insbesondere zu erwähnen, daß die erfindungsgemäßen Maßnahmen nicht nur bei einer Speiseeismaschine, bei der eine scheibenförmige Kältepatrone verwendet wird, anwendbar sind, sondern ebenso bei Speiseeismaschinen, die anders ausgebildete gekühlte Flächen zur Speiseeisbildung aufweisen. So könnte eine hohlzylindrisch ausgebildete Kältepatrone verwendet werden, in welchem Falle dann das Schab- und Rührwerkzeug mit der inneren Mantelfläche der Kältepatrone zusammenwirkt. Es könnte aber auch eine in einen Behälter zentral einsetzbare zylindrische Kältepatrone verwendet werden, wobei dann das die Kältepatrone außen umgreifende Schab- und Rührwerkzeug mit der Mantelfläche der Kältepatrone zusammenwirkt. Weiters könnte der zylindrische Behälter als Ganzes als Kältepatrone ausgebildet sein oder von einer eigenen Kühleinrichtung gekühlt werden, wobei dann das Schab- und Rührwerkzeug mit seinen Innenwandungen zusammenwirkt.

Patentansprüche

1. Speiseeismaschine mit einem zylindrischen Behälter, in dessen Innerem mindestens eine zur Speiseeisbildung dienende gekühlte Fläche vorgesehen ist, und mit einem Elektromotor, der über ein Getriebe eine zentral zum Behälter verlaufende Welle antreibt, die ein mindestens mit der gekühlten Fläche zusammenwirkendes Schab- und Rührwerkzeug trägt, dadurch gekennzeichnet, daß als Elektromotor (4) ein selbstanlaufender Einphasensynchronmotor vorgesehen ist und daß das Schab- und Rührwerkzeug (8) für beide Drehrichtungen der Welle (6) mindestens je einen vorwiegend in der betreffenden Drehrichtung wirksamen Schab- und Rührwerkzeugabschnitt (10, 11) aufweist.

2. Speiseeismaschine nach Anspruch 1, dadurch gekennzeichnet, daß zwei Schab- und Rührwerkzeugabschnitte (10, 11), die vorwiegend in je einer der beiden Drehrichtungen wirksam sind, spiegelbildlich zur Welle ausgebildet sind (Fig.2).

3. Speiseeismaschine nach Anspruch 1 oder 2, dadurch gekennzeichnet, daß die Schab- und Rührwerkzeugabschnitte (10, 11) an ihren mit der gekühlten Fläche zusammenwirkenden Abschnitten (12, 13) in der zum Schaben entgegengesetzten Drehrichtung mit einer der gekühlten Fläche zugewandten Einbuchtung (20) versehen sind (Fig.2, 3).

4. Speiseeismaschine nach einem der vorhergehenden Ansprüche, dadurch gekennzeichnet, daß das vom Einphasensynchronmotor maximal abgebbare Moment entsprechend der gewünschten tiefsten Temperatur des Speiseeises gewählt ist, wobei beim Erreichen dieser Temperatur der Einphasensynchronmotor aufeinanderfolgend seine Drehrichtung wechselt und damit das Schab- und Rührwerkzeug (8) eine Pendelbewegung ausführt.

5. Speiseeismaschine nach Anspruch 4, dadurch gekennzeichnet, daß das vom Einphasensynchronmotor maximal abgebbare Moment durch einen in den Motorstromkreis aufgenommenen, einstellbar ausgebildeten Vorwiderstand (28) regelbar ist (Fig.4).

6. Speiseeismaschine nach einem der vorhergehenden Ansprüche, dadurch gekennzeichnet, daß für jede der beiden Drehrichtungen eine Anzeigevorrichtung (21, 22) vorgesehen ist (Fig.4).

7. Speiseeismaschine nach Anspruch 6, dadurch gekennzeichnet, daß die Anzeigevorrichtungen (21, 22) von einem Schaltarm (25) betätigt werden, der über eine Rutschkupplung mit einem Rad (27) des Getriebes (5) in Verbindung steht (Fig.4).

Fig.1

Fig.2

Fig.3

Fig.4